# EUROPÄISCHE PATENTSCHRIFT

(11) **EP 2 327 512 B1**
(45) Veröffentlichungstag und Bekanntmachung des Hinweises auf die Patenterteilung: **04.09.2013**
(21) Anmeldenummer: 10188150.6
(22) Anmeldetag: 20.10.2010
(51) Int. Cl.: B24C 1/06, B24C 3/32, B24C 11/00, F02F 1/00, F16J 10/00

(54) **Verfahren zum Aufrauhen einer Bauteiloberfläche, insbesondere einer Lauffläche eines Zylinders eines Verbrennungsmotors**
Method for keying the surface of a component, in particular a bearing of a cylinder of a combustion engine
Procédé destiné à rendre rugueux une surface de composant, notamment une surface de roulement d'un cylindre d'un moteur à combustion

(30) Priorität: 25.11.2009 DE 102009055679
(43) Veröffentlichungstag der Anmeldung: 01.06.2011
(73) Patentinhaber: Bayerische Motoren Werke Aktiengesellschaft, 80809 München (DE)
(72) Erfinder: Bluemlhuber, Wolfgang, Dr., 80797 Muenchen (DE); Bauer, Alois, 84098 Hohenthann (DE); Wagener, Wolfram, Dr., 34305 Niedenstein (DE)

(56) Entgegenhaltungen:
- WO-A1-97/31752
- WO-A1-2008/132769
- DE-A1- 19 621 869
- FR-A1- 2 873 946

## Beschreibung

Die vorliegende Erfindung betrifft ein Verfahren zum Aufrauhen einer Bauteiloberfläche gemäß dem Oberbegriff des Patentanspruches 1.

Das Aufrauhen von Zylinderlaufflächen mittels eines Hochdruckwasserstrahls ist z.B. aus der US 5 380 564, der US 5 626 674 sowie der EP 568 315 B1 bekannt. Bei der EP 568 315 wird dabei mit reinem Wasser gearbeitet. Für Anwendungen im industriellen Maßstab müsste mit sehr großen Mengen von Frischwasser gearbeitet werden. Eine Wiederverwendung des Wassers wäre nur dann möglich, wenn eine entsprechend leistungsfähige Wasseraufbereitungsanlage zur Verfügung stünde, was mit hohen Kosten verbunden ist. Da das in der EP 568 315 B1 beschriebene Verfahren aufgrund der sehr hohen Arbeitsdrücke des Wassers und des großen Volumenstroms ohnehin schon sehr teuer ist, ist eine Wasseraufbereitung zur Erzeugung reinen Wassers wirtschaftlich kaum darstellbar.

Aus der FR 2 873 946 ist es bekannt, die Oberfläche einer Zylinderbohrung mittels eines Strahls, bevorzugt eines mit Feststoffpartikel versetzten Flüssigkeitsstrahls und/oder eines Wasserstrahls aufzurauhen. In einer anderen Ausführungsform wird ein flüssiges Konservierungsmittel bevorzugt zu einem Wasserstrahl ohne Reinigungsmittel zugegeben.

Aus der 196 21 869 A1 ist eine Vorrichtung und ein Verfahren bekannt, die zum Reinigen von durch Honen bearbeiteten Werkstückflächen dienen. Hierzu erfolgt eine Bearbeitung durch Strahlen mit einer chemisch inaktiven Druckflüssigkeit in einem Druckbereich zwischen 50 und 200 bar.

Aufgabe der Erfindung ist es, ein alternatives Verfahren zum Aufrauhen einer Bauteiloberfläche, insbesondere einer Lauffläche eines Zylinders eines Verbrennungsmotors anzugeben, das gegenüber herkömmlichen Verfahren Kostenvorteile bietet.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Verfahren zum Aufrauhen einer Bauteiloberffäche, insbesondere einer Lauffläche eines Zylinders eines Verbrennungsmotors, bei dem der Materialabtrag durch Bestrahlen der Bauteiloberfläche mit einem unter Hochdruck stehenden Fluid erfolgt.

Bei dem Fluid handelt es sich um eine Suspension oder um eine Emulsion oder um eine Mischung aus einer Suspension und einer Emulsion.

Unter einer "Suspension" wird ein heterogenes Stoffgemisch aus einer Flüssigkeit und darin fein verteilten Feststoffpartikeln verstanden. Als "Trägermedium" für die Feststoffpartikel wird eine Lösung aus Wasser und/oder einem Reinigungsmittel und/oder einem Biostabilisator, z.B. ein Desinfektions- oder Konservierungsmittel, verwendet. Anstatt des Begriffs "Biostabilisator" kann auch der Begriff "Biozid" verwendet werden.

Biostabilisatorprodukte bzw. Biozidprodukte sind Wirkstoffe und/oder Zubereitungen, die dazu bestimmt sind, auf chemischem oder biologischem Wege Schadorganismen zu zerstören, abzuschrecken, unschädlich zu machen, Schädigungen durch sie zu verhindern oder sie in anderer Weise zu bekämpfen. Als derartige Stoffe gelten auch Mikroorganismen einschließlich Viren oder Pilze mit entsprechender Wirkung. Es gibt eine ganze Palette von Wirkstoffen, die als Biostabilisatoren bezeichnet werden können, z.B. vom einfachen Wasserstoffperoxid über anorganische Chlor-Verbindungen bis hin zu größeren organischen Molekülen. Manche dieser Produkte sind sauer, andere alkalisch.

Für Kühlschmierstoffe kommen z.B. folgende drei unterschiedliche Wirkstoffe in Betracht:
- 1,3,5-(Tris)2-hydroxyethyl-hexahydrotriazin (HHT)
- Gemisch 5-Chlor-2-methyl-4-isothiazolin-3-on / 2-methyl-4-isothiazolin-3-on (CMI/MI)
- 2-n-Octyl-4-isothiazolin-3-one (OIT).

Der Anteil der Feststoffpartikel in der Suspension kann z.B. im Bereich zwischen 5 mg pro Liter und 125 mg pro Liter liegen. Die Partikelgröße der Feststoffpartikel kann im Bereich zwischen 0,001 µm und 0,9 µm liegen. Vorzugsweise liegen die Feststoffpartikel in scharfkantiger, kolloider Form vor. Hinsichtlich ihrer Beschaffenheit können Feststoffpartikel aus Al₂O₃ verwendet werden. Alternativ dazu können auch AlSi-Oxid-Partikel oder AlMn-Oxid-Partikel mit Spuren von Fe, Cr und/oder Cu verwendet werden.

Geeignete Suspensionen können ferner anhand ihrer Viskosität, ihres pH-Werts sowie ihrer elektrischen Leitfähigkeit näher spezifiziert werden. Als besonders geeignet haben sich folgende Parameterkombinationen herausgestellt:
- Viskosität der Suspension im Bereich zwischen 0,5 und 1,2 mPa •s;
- pH-Wert im Bereich zwischen 0,2 und 7,5;
- elektrische Leitfähigkeit im Bereich zwischen 50 und 700 µS ("Mikro-Siemens").

Alternativ dazu sind auch folgende Suspensionen geeignet:
- Viskosität im Bereich zwischen 0,9 und 2,2 mPa •s;
- pH-Wert im Bereich zwischen 6,8 und 14;
- Elektrische Leitfähigkeit im Bereich zwischen 550 und 5000 µS.

Unter dem Begriff "Emulsion" wird ein fein verteiltes Gemisch von mindestens zwei nicht oder nur schlecht mischbaren Flüssigkeiten ohne sichtbare Entmischung verstanden. Bei der ersten Flüssigkeit der Emulsion, die auch als Trägermedium bezeichnet werden kann, handelt es sich um eine Lösung aus Wasser und/oder einem Emulgator und/oder einem Korrosionsschutzmittel und/oder einem Biostabilisator.

Besonders geeignet ist ein derartiges Trägermedium, wenn seine Viskosität im Bereich zwischen 0,5 und 1,5 mPa •s liegt, seine elektrische Leitfähigkeit im Bereich zwischen 1 und 10 µS und wenn es eine Erdalkali-lonen-Konzentration im Bereich zwischen 1 mmol pro Liter und 20 mmol pro Liter aufweist, was auch als "Härtegrad" interpretiert werden kann.

Bei der zweiten Flüssigkeit der Emulsion kann es sich um ein Öl, insbesondere um ein Mineralöl oder ein natürliches oder synthetisch hergestelltes Esteröl handeln ,das vorzugsweise eine Dichte im Bereich zwischen 0,5 und 1,2 kg/l und eine Viskosität im Bereich zwischen 4 mPa • s und 60 mPa • s aufweist.

Der Volumenanteil der zweiten Flüssigkeit in Bezug auf das Volumen der Emulsion liegt vorzugsweise im Bereich zwischen 0,1 % und 5 %.

Aus der Verwendung einer Suspension ergeben sich insbesondere folgende Vorteile:
- Es kann mit geringeren Fluiddrücken und somit mit einer kleineren Hochdruckpumpe gearbeitet werden, da die in der Suspension verteilten Feststoffpartikel eine zusätzliche abrasive Wirkung entfalten. Der Materialabtrag erfolgt somit nicht allein durch den Druck der auftreffenden Flüssigkeitspartikel, sondern auch bzw. insbesondere durch die beim Aufprall der "Nano-Partikel" frei werdenden kinetischen Energie.
- Die in der Suspension verteilten Feststoffpartikel sollten so gewählt werden, dass sie die Hochdruckpumpe nicht beschädigen. Dichtungssysteme von auf dem Markt erhältlichen Hochdruckpumpen sind so ausgelegt, dass sie einer Partikelgröße von bis zu 1µm standhalten.
- Vorzugsweise werden Feststoffpartikel gewählt, deren chemische Zusammensetzung ähnlich der der Bauteiloberfläche ist, so dass sie gegebenenfalls als Rückstand bzw. Anlagerung auf der bestrahlten Oberfläche zurückbleiben können und keinen negativen Einfluss auf das spätere Bauteil haben.

Die Qualität der zum Aufrauhen verwendeten Suspension kann konstant auf rechterhalten werden, indem bei einem Partikelüberschuss überschüssige Feststoffpartikel separiert bzw. bei einem Partikelmangel der Suspension zusätzliche Feststoffpartikel zugeführt werden.

Bei der Verwendung einer erfindungsgemäßen Emulsion wird eine hohe Anlagenstandzeit erreicht, da das in der Emulsion fein verteilte Öl als Korrosionsschutz für die Anlage dient. Aufgrund der hohen Arbeitsdrücke beim Wasserstrahlen wird das Öl immer wieder "aufgebrochen" und verteilt sich dementsprechend fein in der Emulsion. Ölagglomerationen werden somit ausgeschlossen.

Bei der Verwendung einer leichten zweiten Flüssigkeit als Biostabilisator schwimmt die zweite Flüssigkeit im Emulsionsreservoir auf und wirkt an der Oberfläche als biologischer Reaktionsschutz.

## Patentansprüche

1. Verfahren zum Aufrauhen einer Bauteiloberfläche, insbesondere einer Lauffläche eines Zylinders eines Verbrennungsmotors, durch Bestrahlen der Bauteiloberfläche mit einem Fluid,
wobei es sich bei dem Fluid um eine Suspension oder um eine Emulsion oder um eine Mischung aus einer Suspension und einer Emulsion handelt,
**dadurch gekennzeichnet**, das
- es sich bei dem Frägermedium der Suspensionum eine Lösung aus Wasser und einem Reinigungsmittel und einem Biostabilisator handelt,
- die Emulsion aus einer ersten und einer zweiten Flüssigkeit besteht, wobei es sich bei der ersten Flüssigkeit um eine Lösung aus Wasser und einem Emulgator und einem Korrosionsschutzmittel und/oder einem Biostabilisator handelt.

2. Verfahren nach Anspruch 1,
**dadurch gekennzeichnet, dass** die Suspension eine Viskosität im Bereich zwischen 0,5 und 1,2 mPa · s aufweist.

3. Verfahren nach Anspruch 2,
**dadurch gekennzeichnet, dass** die Suspension einen pH-Wert im Bereich zwischen 0,2 und 7,5 aufweist.

4. Verfahren nach Anspruch 2 oder 3,
**dadurch gekennzeichnet, dass** die Suspension eine elektrische Leitfähigkeit im Bereich zwischen 50 und 700 µS/m aufweist.

5. Verfahren nach Anspruch 1,
**dadurch gekennzeichnet, dass** die Suspension eine Viskosität im Bereich zwischen 0,9 und 2,2 mPas aufweist.

6. Verfahren nach Anspruch 5,
**dadurch gekennzeichnet, dass** die Suspension einen pH-Wert im Bereich zwischen 6,8 und 14 aufweist.

7. Verfahren nach Anspruch 5 oder 6,
**dadurch gekennzeichnet, dass** die Suspension eine elektrische Leitfähigkeit im Bereich zwischen 550 und 5000 µS/m aufweist.

8. Verfahren nach einem der Ansprüche 1 bis 7,
**dadurch gekennzeichnet, dass** die Suspension einen Feststoffanteil im Bereich zwischen 5 und 125 mg/Liter aufweist.

9. Verfahren nach einem der Ansprüche 1 bis 8,
**dadurch gekennzeichnet, dass** die Suspension Feststoffpartikel mit einer Partikelgröße im Bereich zwischen 0,001 µm und 0,9 µm aufweist.

10. Verfahren nach einem der Ansprüche 1 bis 9,
**dadurch gekennzeichnet, dass** die Feststoffpartikel der Suspension ganz oder teilweise aus Al₂O₃ bestehen oder aus AlSi-Oxid oder aus AlMn-Oxid mit Spuren von Fe, Cr und/oder Cu.

11. Verfahren nach einem der Ansprüche 1 bis 10,
**dadurch gekennzeichnet, dass** die Emulsion eine Viskosität im Bereich zwischen 0,5 mPas und 1,5 mPas aufweist.

12. Verfahren nach einem der Ansprüche 1 bis 11,
**dadurch gekennzeichnet, dass** die Emulsion einen pH-Wert im Bereich zwischen 7 und 11 aufweist.

13. Verfahren nach einem der Ansprüche 1 bis 12,
**dadurch gekennzeichnet, dass** die Emulsion eine elektrische Leitfähigkeit im Bereich zwischen 1 µS/m und 10 µS/m aufweist.

14. Verfahren nach einem der Ansprüche 1 bis 13,
**dadurch gekennzeichnet, dass** die Emulsion eine Konzentration von ErdalkaliIonen im Bereich zwischen 1 mmol/l und 20 mmol/l aufweist.

15. Verfahren nach einem der Ansprüche 11 bis 14,
**dadurch gekennzeichnet, dass** es sich bei der zweiten Flüssigkeit um ein Öl, insbesondere um ein Mineralöl oder um ein natürlich oder synthetisch hergestelltes Esteröl handelt.

16. Verfahren nach Anspruch 15,
**dadurch gekennzeichnet, dass** die Dichte des Öls im Bereich zwischen 0,5 kg/l und 1,2 kg/l liegt.

17. Verfahren nach Anspruch 16,
**dadurch gekennzeichnet, dass** die Viskosität des Öls im Bereich zwischen 4 mPas und 60 mPas liegt.

18. Verfahren nach einem der Ansprüche 11 bis 17,
**dadurch gekennzeichnet, dass** der Volumenanteil der zweiten Flüssigkeit in Bezug auf das Volumen der Emulsion im Bereich zwischen 0,1 % und 5 % liegt.

## Claims

1. A method of roughening the surface of a component, especially a contact surface of a cylinder of an internal combustion engine, by exposing the surface of the component to blasting by a fluid,
wherein the fluid is a suspension or an emulsion or a mixture of a suspension and an emulsion,
**characterised in that**
- the carrier medium suspension is a solution of water and a detergent and a biostabiliser, and
- the emulsion comprises a first and a second fluid, wherein the first fluid is a solution of water and an emulsifier and an anti-corrosion agent and/or a biostabiliser.

2. A method according to claim 1,
**characterised in that** the suspension has a viscosity of 0.5 to 1.2 mPa/s.

3. A method according to claim 2,
**characterised in that** the suspension has a pH between 0.2 and 7.5.

4. A method according to claim 2 or claim 3,
**characterised in that** the suspension has an electric conductivity between 50 and 700 µS/m.

5. A method according to claim 1,
**characterised in that** the suspension has a viscosity between 0.9 and 2.2 mPa/s.

6. A method according to claim 5,
**characterised in that** the suspension has a pH between 6.8 and 14.

7. A method according to claim 5 or claim 6,
**characterised in that** the suspension has an electric conductivity between 550 and 5000 µS/m.

8. A method according to any of claims 1 to 7,
**characterised in that** the suspension has a solid content between 5 and 125 mg/litre.

9. A method according to any of claims 1 to 8,
**characterised in that** the suspension contains solid particles having a particle size between 0.001 µm and 0.9 µm.

10. A method according to any of claims 1 to 9,
**characterised in that** the solid particles in the suspension consist partly or entirely of Al₂O₃ or AlSi oxide or AlMn oxide with traces of Fe, Cr and/or Cu.

11. A method according to any of claims 1 to 10,
**characterised in that** the emulsion has a viscosity between 0.5 and 1.5 mPa/s.

12. A method according to any of claims 1 to 11,
**characterised in that** the emulsion has a pH between 7 and 11.

13. A method according to any of claims 1 to 12,
**characterised in that** the emulsion has an electric conductivity between 1 and 10 µS/m.

14. A method according to any of claims 1 to 13,
**characterised in that** the emulsion has a concentration of alkaline earth ions in the range between 1 mmol/I and 20 mmol/l.

15. A method according to any of claims 11 to 14,
**characterised in that** the second fluid is an oil, especially a mineral oil or a natural or synthetic ester oil.

16. A method according to claim 15,
**characterised in that** the density of the oil is between 0.5 and 1.2 kg/I.

17. A method according to claim 16,
**characterised in that** the viscosity of the oil is between 4 and 60 mPa/s.

18. A method according to any of claims 11 to 17,
**characterised in that** the proportion by volume of the second fluid relative to the volume of the emulsion is between 0.1 % and 5%.

## Revendications

1. Procédé permettant de rendre rugueuse la surface d'un élément, en particulier la surface de roulement d'un cylindre d'un moteur à combustion interne par pulvérisation de la surface de cet élément avec un fluide,
ce fluide étant une suspension ou une émulsion ou un mélange d'une suspension et d'une émulsion,
**caractérisé en ce que**
le milieu support de la suspension est une solution d'eau d'un agent de nettoyage et d'un stabilisant biologique,
l'émulsion est constituée d'un premier et d'un second liquide,
le premier liquide étant une solution d'eau, d'un émulsifiant et d'un agent de protection contre la corrosion et/ou d'un agent stabilisant biologique.

2. Procédé conforme à la revendication 1,
**caractérisé en ce que**
la suspension présente une viscosité située dans la plage comprise entre 0,5 et 1,2 mPas.

3. Procédé conforme à la revendication 2,
**caractérisé en ce que**
la suspension présente un pH situé dans la plage comprise entre 0,2 et 7,5.

4. Procédé conforme à la revendication 2 ou 3,
**caractérisé en ce que**
la suspension présente une conductivité électrique située dans la plage comprise entre 50 et 700 µS/m.

5. Procédé conforme à la revendication 1,
**caractérisé en ce que**
la suspension présente une viscosité située dans la plage comprise entre 0,9 et 2,2 mPas.

6. Procédé conforme à la revendication 5,
**caractérisé en ce que**
la suspension présente un pH situé dans la plage comprise entre 6,8 et 14.

7. Procédé conforme à la revendication 5 ou 6,
**caractérisé en ce que**
la suspension présente une conductivité électrique située dans la plage comprise entre 550 et 5000 uS/m.

8. Procédé conforme à l'une des revendications 1 à 7,
**caractérisé en ce que**
la suspension présente une teneur en solides située dans la plage comprise entre 5 et 125 mg/l.

9. Procédé conforme à l'une des revendications 1 à 8,
**caractérisé en ce que**
la suspension comporte des particules solides ayant une granulomètrie située dans la plage comprise entre 0,001 µm et 0,9 µm.

10. Procédé conforme à l'une des revendications 1 à 9,
**caractérisé en ce que**
les particules solides de la suspension sont totalement ou partiellement en Al₂O₃ ou en un oxyde AlSi ou en un oxyde AlMn avec des traces de Fe, Cr et/ou Cu.

11. Procédé conforme à l'une des revendications 1 à 10,
**caractérisé en ce que**
l'émulsion présente une viscosité située dans la plage comprise entre 0,5 mPas et 1,5 mPas.

12. Procédé conforme à l'une des revendications 1 à 11,
**caractérisé en ce que**
l'émulsion présente un pH situé dans la plage comprise entre 7 et 11.

13. Procédé conforme à l'une des revendications 1 à 12,
**caractérisé en ce que**
l'émulsion présente une conductivité électrique située dans la plage comprise entre 1 µS/m et 10 µS/m.

14. Procédé conforme à l'une des revendications 1 à 13,
**caractérisé en ce que**
l'émulsion renferme une concentration en ions alcalino-terreux située dans la plage comprise entre 1 mmol/l et 20 mmol/l.

15. Procédé conforme à l'une des revendications 11 à 14,
**caractérisé en ce que**
le second liquide est une huile, en particulier une huile minérale ou une huile estérifiée naturelle ou obtenue par synthèse.

16. Procédé conforme à la revendication 15,
**caractérisé en ce que**
la densité de l'huile est située dans la plage comprise entre 0,5 kg/l et 1,2 kg/l.

17. Procédé conforme à la revendication 16,
**caractérisé en ce que**
la viscosité de l'huile est située dans la plage comprise entre 4 mPas et 60 mPas.

18. Procédé conforme à l'une des revendications 11 à 17,
**caractérisé en ce que**
la proportion volumique du second liquide par rapport au volume de l'émulsion est située dans la plage comprise entre 0,1 % et 5 %.
